Europäisches Patentamt

European Patent Office

Office européen des brevets

(19)

(11) **EP 0 765 547 B1**

(12) **EUROPÄISCHE PATENTSCHRIFT**

(45) Veröffentlichungstag und Bekanntmachung des Hinweises auf die Patenterteilung:
**01.09.1999   Patentblatt 1999/35**

(21) Anmeldenummer: **95920777.0**

(22) Anmeldetag: **10.06.1995**

(51) Int Cl.⁶: **H04H 1/00**

(86) Internationale Anmeldenummer:
**PCT/DE95/00754**

(87) Internationale Veröffentlichungsnummer:
**WO 95/34965 (21.12.1995 Gazette 1995/54)**

(54) **VERFAHREN ZUR ÜBERTRAGUNG DIGITALER AUDIODATEN UND ALS DATENPAKETE ÜBERTRAGENER ZUSATZDATEN**

PROCESS FOR TRANSMITTING DIGITAL AUDIO DATA AND PACKET-TRANSMITTED COMPLEMENTARY DATA

PROCEDE DE TRANSMISSION DE DONNEES AUDIO NUMERISEES ET DE DONNEES SUPPLEMENTAIRES TRANSMISES PAR PAQUETS

(84) Benannte Vertragsstaaten:
**CH DE ES FR GB IT LI SE**

(30) Priorität: **16.06.1994   DE 4422015**

(43) Veröffentlichungstag der Anmeldung:
**02.04.1997   Patentblatt 1997/14**

(73) Patentinhaber: **ROBERT BOSCH GMBH**
**70442 Stuttgart (DE)**

(72) Erfinder:
• **HALLIER, Jürgen**
**D-31188 Holle (DE)**
• **LAUTERBACH, Thomas**
**D-31139 Hildesheim (DE)**
• **UNBEHAUN, Matthias**
**D-31137 Hildesheim (DE)**

(56) Entgegenhaltungen:
**EP-A- 0 577 329          DE-A- 4 335 271**

• **SIGNAL PROCESSING. IMAGE COMMUNICATION, Bd.4, Nr.2, April 1992, AMSTERDAM NL Seiten 153 - 159 ALEXANDER G. MCINNES 'The MPEG systems coding specification'**

**Beschreibung**

Stand der Technik

Die Erfindung geht aus von einem Verfahren zur Übertragung digitaler Daten und digitaler Zusatzdaten nach der Gattung des Hauptanspruchs. Es ist aus dem Artikel "Digital Audio Broadcasting, Radiohören in CD-Qualität" der Zeitschrift Funkschau, Ausgabe 16, 1992 bekannt, digitale Daten in Form von Audiodaten und digitale Zusatzdaten, die z.B. den Verkehr oder die Verkehrsleitsysteme betreffen, zu übertragen. Die Zusatzdaten werden unabhängig von den Daten abgespeichert und auf Wunsch unabhängig von den Daten ausgegeben.

"The MPEG systems coding specification", (G. Mcinnes, Signal Processing Image Communication, Bd. 4,, Nr.2, S. 155-159) stellt dar, daß der Strom der zu übertragenden digitale Daten in "Video Presentation Units" oder "Audio Presentation Units" aufgeteilt wird. Die Presentation Units entstehen durch Zuordnung einer internen Zeitmarke im Encoder des Systems. Die Zuordnung von Zeitmarken zu den Units wird notwendig, um sicherzustellen, daß die Bild- und Audiodaten zeitlich parallel wiedergegeben werden.

In der EP 0 577 329 A2 wird eine Anordnung für Asynchronous Transfer Mode- (ATM-) Netzwerke beschrieben, die die Ableitung eines Systemtaktes aus einem asynchron übertragenen gemultiplexten Audio- und Videosignal ermöglicht, so daß eine Synchronisierung der asynchron übertragenen Nutzdaten erreicht wird. Die Anordnung dient zur Wiederherstellung der durch die asynchrone Übertragung verlorengegangenen Synchronität der Daten.

In der(DE 43 35 271 A1) wird ein Daten-Demultiplexer beschrieben, dem gemultiplexte Audio- und Videodaten von einem Speichermedium zugeführt werden, wobei dem Multiplexsignal Zeitmarken zur Kennzeichnung der Startzeitpunkte der Audio- und Videopakete zugeordnet sind.

Vorteile der Erfindung

Das erfindungsgemäße Verfahren mit den Merkmalen des Anspruchs 1 hat demgegenüber den Vorteil, daß die digitalen Zusatzdaten wie z.B. Bilddaten, Textdaten oder Sprachdaten in festgelegte Datengruppen als Einheiten eingeteilt werden. Eine Einheit beinhaltet z.B. ein Bild oder einen Bildausschnitt bzw. ein Lied oder einen Teil eines Liedes oder eine Textseite oder einen Teil eines Textes. Für jede Einheit wird eine Kennung der Einheit und Steuerzeichen der Einheit übertragen, die bei Auswahl der Einheit dem Empfänger angeben, zu welcher Zeit die Wiedergabe bzw. die Ausgabe der Einheit beginnt und wie lange die Wiedergabe bzw. die Ausgabe der Einheit dauert. Dadurch wird erreicht, daß zu Daten, wie z.B. Audiodaten, Zusatzdaten zur Verfügung stehen, die durch eine entsprechende Auswahl im Empfänger zeitlich synchron ausgegeben werden. Es ist dem Benutzer des Empfängers überlassen, aus den angebotenen Zusatzdaten, die Zusatzdaten abzurufen, die der Benutzer ausgegeben haben möchte. Auf diese Weise wird ein multimediales Datenübertragungsverfahren ermöglicht.

Das erfindungsgemäße Verfahren mit den Merkmalen des Anspruchs 11 hat demgegenüber den Vorteil, daß digitale Daten wie z.B. Audiodaten und digitale Zusatzdaten wie z.B. Bilddaten und/oder Textdaten und/oder Sprachdaten zur Ausgabe ausgewählt werden können und die Ausgabe der Daten und der Zusatzdaten in einer zeitlich synchronen Form erfolgt. Auf diese Weise hat der Benutzer eines Empfängers, der nach dem beschriebenen Verfahren betrieben wird, die Möglichkeit, aus einer angebotenen Vielzahl von Daten und Zusatzdaten, die Informationen, die ihn besonders interessieren, auszuwählen und individuell für sich ausgeben zu lassen.

Dadurch wird eine interaktive und multimediale Nutzung des Empfängers erreicht.

Durch die in den Unteransprüchen aufgeführten Maßnahmen sind vorteilhafte Weiterbildungen und Verbesserungen des im Anspruch 1 angegebenen Verfahren möglich. Eine Verbesserung des Verfahrens wird erreicht, indem für jede Einheit eine Speicherzeit oder ein Speicherintervall übertragen wird, das angibt, wie lange die Einheit in einem Empfänger abgespeichert wird. Dadurch ist es möglich, den Bedarf an Speicherplatz an den benötigten Bedarf anzupassen. Auf diese Weise wird Speicherplatz eingespart. Besonders vorteilhaft ist es, bei der Verwendung mehrerer Übertragungskanäle für jede Einheit ein Kanalwort mit zu übertragen, das den verwendeten Übertragungskanal angibt. Auf diese Weise wird der Übertragungskanal der entsprechenden Einheit schnell gefunden. Zusätzlich ist es dadurch nach Auswahl der Einheiten möglich, den Empfang auf die entsprechenden Übertragungskanäle zu beschränken. Besonders vorteilhaft ist es, daß dadurch mehrere zur Verfügung stehende Übertragungskanäle je nach Auslastung zur Übertragung der Einheiten verwendet werden können, wodurch eine effiziente Ausnutzung der Übertragungskapazitäten der Übertragungskanäle erreicht wird.

Weiterhin ist es von Vorteil, den Beginn der Übertragung jeder Einheit zu übertragen und die Anzahl der zu der Einheit gehörenden Datenbits mit zu übertragen. Somit ist einem Empfänger der Zeitraum bekannt, in dem eine Einheit übertragen wird, so daß der Empfänger den zur Abspeicherung der Einheit benötigten Speicherplatz rechtzeitig zur Verfügung stellen kann. Dadurch wird Speicherbedarf eingespart. Das beschriebene Verfahren wird dadurch verbessert, daß eine Anzahl von Wiederholungen der Übertragung der Einheit mit übertragen wird. Auf diese Weise weiß der Empfänger, ob bzw. wie oft die Einheit wiederholt wird. Dies bietet den Vorteil, daß bei einer fehlerhaften Übertragung der Einheit der Empfänger bei der nächsten Übertragung der Einheit die Einheit wieder empfängt und abspeichert. Auf diese Weise wird eine erhöhte Zuverlässigkeit der Übertragung der Daten erreicht.

Die Flexibilität der Darstellung der Zusatzdaten wird dadurch erhöht, daß Wiedergabeattribute für die Darstellung bzw. die Ausgabe der Einheiten übertragen werden. Somit ist es möglich, ohne die Einheiten erneut mit zu übertragen, die Darstellung bzw. die Ausgabe zeitlich zu variieren. Auf diese Weise wird eine interessantere Darstellung bzw. Ausgabe der Daten ohne einen zusätzlich großen Übertragungsaufwand ermöglicht.

Die Verwendung einer Prüfsumme für die Übertragung der Einheiten ermöglicht es, eine Fehlerüberprüfung der Übertragung durchzuführen. Damit wird die Zuverlässigkeit des Übertragungsverfahrens erhöht.

Die Benutzung des Übertragungsverfahrens wird weiter verbessert, indem mehrere Einheiten zu Komponenten, und mehrere Komponenten wiederum zu einem Programm zusammengefaßt werden. Somit hat ein Benutzer die Möglichkeit, die Komponenten eines Programmes auszuwählen, so daß die Einheiten, die Bestandteil der Komponenten sind, ausgegeben werden.

Als Komponenten werden z.B. unterschiedliche Datenarten wie z.B. Bilder, Musik, Sprache, und Texte oder unterschiedliche Dateninhalte wie politische Nachrichten, Sportnachrichten und Börsennachrichten verwendet. Dies bietet den Vorteil, daß nicht jede Einheit speziell ausgewählt werden muß, sondern mit der Auswahl einer Komponente eine Vielzahl von Einheiten bestimmt wird. Dies erhöht den Komfort bei der Benutzung des Übertragungsverfahrens.

Die Verwendung von Bezeichnungen oder Namen für die Einheiten und Komponenten, die bei einem Empfänger dargestellt oder ausgegeben werden, vereinfachen die Auswahl für einen Benutzer des Empfängers, da es angenehmer ist, Bezeichnungen oder Namen anstelle von unverständlichen Codeworten auszuwählen. Damit wird der Komfort bei der Benutzung des Übertragungsverfahrens erhöht.

Das beschriebene Verfahren eignet sich besonders für die Übertragung eines digitalen Rundfunkprogrammes, wobei die Daten z.B. Audiodaten und die Zusatzdaten Bilddaten und/oder Audiodaten und/oder Textdaten darstellen. Auf diese Weise wird ein multimediales, interaktives Rundfunkprogramm ermöglicht, das einen höheren Informationsgehalt bereitstellt und die Möglichkeit bietet, ein Programm individuell zusammenzustellen.

Durch die in den Unteransprüchen angeführten Maßnahmen sind vorteilhafte Weiterbildungen und Verbesserungen des im Anspruch 11 angegebenen Verfahrens möglich. In vorteilhafter Weise wird das Verfahren verbessert, indem für jede Einheit eine Speicherzeit, die angibt, wie lange eine Einheit in einem Speicher abgelegt wird, gespeichert wird. Dadurch hat der Empfänger die Möglichkeit den zur Verfügung zu haltenden Speicherplatz optimal einzuteilen. Auf diese Weise kann der bereit zu haltende Speicherplatz minimal ausgebildet werden.

Das beschriebene Verfahren wird vorteilhaft erweitert, indem ein mit jeder Einheit übertragenes Kanalwort abgespeichert wird, das den Übertragungskanal angibt über den die Einheit übertragen wird. Auf diese Weise ist es bei Verwendung mehrerer Übertragungskanäle für den Empfänger möglich, die Einheiten aufzufinden und nur die ausgewählten Einheiten abzuspeichern.

Besonders vorteilhaft ist es, Wiedergabeattribute für jede Einheit abzuspeichern. Dadurch wird erreicht, daß der Empfänger Daten einer Einheit in Abhängigkeit von den abgespeicherten Wiedergabeattributen zeitlich unterschiedlich wiedergibt. Auf diese Weise wird das beschriebene Verfahren ohne einen großen zusätzlichen Datenaufwand in seinen Funktionen erweitert. Die Wiedergabe der Einheiten ist somit interessanter zu gestalten, wodurch der Komfort erhöht wird.

Das beschriebene Verfahren eignet sich besonders zum Betreiben eines digitalen Rundfunkempfängers. Die Funktionsweise des Verfahrens wird erweitert, indem mehrere Einheiten zu einer Komponente zusammengefaßt werden und mehrere Komponenten zu einem Programm zusammengefaßt werden. Auf dies Weise kann ein individuelles Programm durch eine Auswahl von Komponenten zusammengestellt werden, ohne jede einzelne Einheit auswählen zu müssen. Dadurch wird der Komfort bei der Nutzung des Empfängers erhöht.

Besonders vorteilhaft ist es, die in einem Speicher abgelegten Zusatzdaten nach Ablauf der mit den Zusatzdaten übertragenen Speicherzeit zu löschen oder mit neuen, empfangenen Zusatzdaten zu überschreiben. Auf diese Weise wird eine weiter verbesserte Ausnutzung des zur Verfügung stehenden Speicherplatzes erreicht. Weiterhin ist es von Vorteil, daß nach Eingabe einer Auswahl von Einheiten und/oder von Komponenten nur die ausgewählten Einheiten im Empfänger zwischengespeichert werden. Dadurch wird der zur Abspeicherung notwendige Speicherplatz minimiert.

Zeichnung

Ein Ausführungsbeispiel der Erfindung ist in der Zeichnung dargestellt und in der nachfolgenden Beschreibung näher erläutert. Es zeigen Figur 1 einen Übertragungsrahmen, Figur 2 eine Fast-Information-Gruppe, Figur 3 ein Typ-2-Feld, Figur 4 ein zweites Typ-2-Feld, Figur 5 ein drittes Typ-2-Feld, Figur 6 ein Typ-1-Feld, Figur 7 ein Programmfeld, Figur 8 einen Komponentenzeiger und Figur 9 einen digitalen Empfänger.

Beschreibung des Ausführungsbeispiels

Die Übertragung der Daten, die Einteilung der Übertragungskanäle, die Art der Übertragung der Daten und die Synchronisation der Daten wird von einem übergeordneten Rahmenprotokoll geregelt, das nicht explizit beschrieben wird. Das gesamte Übertragungsverfahren ist jedoch z.B. von P.Ratliff,"EUREKA 147 Digital Audio Broadcasting- The System for Mobile, Portable and Fixed Receivers", Second International Symposium on Digital Audio Broadcasting, Toronto, Canada, März 1994, S. 294 ff. beschrieben.

Weitergehende Ausführungen sind bei Pommier, "high quality digital sound broadcasting to mobile, portable and fixed receivers", IEEE International Broadcasting Conference, No. 293, Brighton, September, 1988,
bei ETSI,"Radio Broadcasting System; Digital Audio Broadcasting (DAB) to mobile portable and fixed receivers", European Telecommunication Standard Draft prETS300401, Sophia Antipolis, January 1994,
bei Chambers,J.P.,"DAB system multiplex organization", Proc. First International Symposium on DAB, EBU, Montreux, Juni, 1992, S. 111-120,
und bei Le Floch," Channel coding and modulation for DAB", Proc. First International Symposium on DAB, EBU, Montreux, Juni, 1992, S. 99-110 beschrieben.

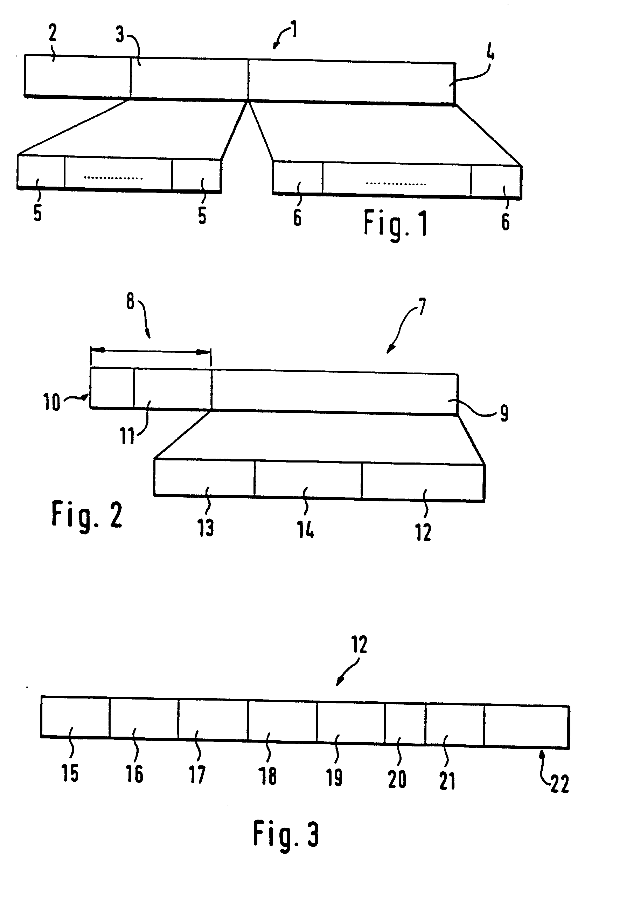

In diesem Ausführungsbeispiel werden nur die Datenformate beschrieben, die für die Übertragung der Steuerdaten notwendig sind. Figur 1 zeigt einen Übertragungsrahmen 1, der zur Übertragung der Daten bei digitaler Rundfunkübertragung (Digital-Audio-Broadcast,DAB) verwendet wird. Der Übertragungsrahmen 1 besteht aus einem Synchronisationskanal 2, einem Fast-Information-Kanal 3 und einem Main-Service-Kanal 4. Der Übertragungsrahmen 1 besteht aus einer festgelegten Anzahl an Datenbits. Der Fast-Information-Kanal 3 ist wiederum in Fast-Information-Blöcke 5 aufgeteilt. Im Synchronisationskanal ist eine Anzahl festgelegter Datenbits angeordnet, die für die Synchronisation des Übertragungsrahmens 1 verwendet werden.

Im Main-Service-Kanal 4 werden Nutzdaten in Form von Datenrahmen (Common Interleaved Frame, CIF) 6 übertragen. Unter Nutzdaten sind die digitalen Daten wie z.B. Audiodaten und die digitalen Zusatzdaten wie z.B. Bilddaten, Audiodaten oder Textdaten zu verstehen. Die Daten des Main-Service-Kanals 4 sind zeit-interleaved. Die Datenrahmen 6 sind individuell faltungscodiert, wobei gleicher oder unterschiedlicher Fehlerschutz verwendet wird.

Der Fast-Information-Kanal 3 wird verwendet, um Informationen schnell zu einem Empfänger zu übertragen. Im besonderen wird über den Fast-Information-Kanal 3 die Multiplexanordnung des Main-Service-Kanals 4 übertragen. Zusätzlich werden über den Fast-Information-Kanal 3 die zur Steuerung der Zusatzdaten notwendigen Daten übertragen.

Darunter sind die Daten zu verstehen, die zur Darstellung der Zusatzdaten notwendig sind. Dies erfolgt in Form der Fast-Information-Blöcke 5. Der Fast-Information-Kanal 3 ist nicht zeit-interleaved und weist einen festgelegten Fehlerschutz auf.

Der Synchronisationskanal 2 wird innerhalb des Übertragungssystems für Basisdemodulatorfunktionen wie z.B. die Synchronisation des Übertragungsrahmens 1, automatische Frequenzkontrolle, Kanalzustandsschätzung und zur Identifikation des Senders verwendet. Jeder Fast-Information-Block ist in Fast-Information-Gruppen unterteilt.

Figur 2 zeigt eine erste Fast-Information-Gruppe 7, die eine Fast-Information-Gruppe des Typs 2 darstellt. Die erste Fast-Information-Gruppe 7 weist einen Header 8 auf, der aus einem ersten Datenwort 10 und einem zweiten Datenwort 11 besteht. Das erste Datenwort 10 gibt den Typ der Fast-Information-Gruppe, in diesem Fall den Typ 2 an. Dazu wird die Datenbitfolge 010 verwendet.

Die Fast-Information-Gruppe 7 weist weiterhin ein Datenfeld 9 auf. Das zweite Datenwort 11 gibt die Länge des Datenfeldes 9 an. Das Datenfeld 9 ist in ein drittes Datenwort 13, ein Extension-Feld 14 und ein Typ-2-Feld 12 unterteilt. Das dritte Datenfeld 13 weist eine Länge von 4 Bits auf und steht für zukünftige Anwendungen noch frei zur Verfügung. Das Extension-Feld 14 ist 4 Bit lang und erlaubt es dem Typ-2-Feld eine bestimmte Bedeutung zuzuordnen.

Figur 3 zeigt ein erstes Typ-2-Feld 12 mit der Extension 0. D.h. im Extension-feld 14 wird das Symbol 0 abgelegt. Das erste Typ-2-Feld 12 ist in ein Programmkennfeld 15, ein

Einheitskennfeld 16, ein erstes und zweites Startfeld 17, 18, ein Gültigkeitsfeld 19, ein freies Datenfeld 20, ein Übertragungswegfeld 21 und ein Übertragungsfeld 22 unterteilt. Das Programmkennfeld 15 gibt das Programm an, dem die Einheit zugeordnet ist. Das Einheitskennfeld 16 gibt eine Kennnummer der Einheit an, mit der die Einheit, für die das erste Type-2-Feld 12 übertragen wird, eindeutig gekennzeichnet ist. Als Kennummer wird eine bestimmte Bitfolge verwendet. Das erste Startfeld 17 gibt den Beginn der Gültigkeitsperiode der Einheit in Form des Modified Julian Date an. Das zweite Startfeld 18 gibt den Beginn der Gültigkeitsperiode der Einheit im Coordinated-Universal-Time-Code (UTC) an.

Das Modified Julian Date und der Coordinated-Universal-Time-Code sind festgelegte Zeitrechnungen, die z.B. in "Specification of the Radio Data System (RDS)", European Standard, EN 50067, Geneva, April 1992, Kapitel 8.1.3 beschrieben sind.

Selbstverständlich können auch andere Zeitrechnungen verwendet werden. Das Gültigkeitsfeld 19 gibt die Dauer der Gültigkeitsperiode der Einheit in Stunden, Minuten und Sekunden gerechnet ab dem Beginn der Gültigkeitsperiode, codiert im Coordinated-Universal-Time-Code (UTC), an. Die Gültigkeitsperiode gibt an, wie lange eine Einheit in einem Speicher abgelegt wird. Das freie Datenfeld 20 steht für einen zukünftigen Gebrauch frei zur Verfügung. Als Kanalwort gibt das Übertragungskennfeld 21 den Übertragungskanal an, über den die Einheit übertragen wird. Dabei wird zum Beispiel mit den Datenbits 00 ein kontinuierlicher Datenstrom (Streammode) als Übertragungskanal, mit 01 ein in Datenpakete eingeteilter Datenstrom (Packetmode) als Übertragungskanal und mit 10 ein in Form von eng mit den Audiodaten verbundener Datenstrom (program associated data), die in einem Ancillary-Datenfeld der Iso-Norm 11172/3 übertragen werden, als Übertragungskanal bezeichnet.

Das Transportfeld 22 gibt an, wo in dem entsprechenden Übertragungskanal die entsprechende Einheit zu finden ist. Das erste Typ-2-Feld 12 gibt somit die Startzeit, die Dauer der Darstellung einer Einheit und den Übertragungskanal an, über den die Einheit übertragen wird.

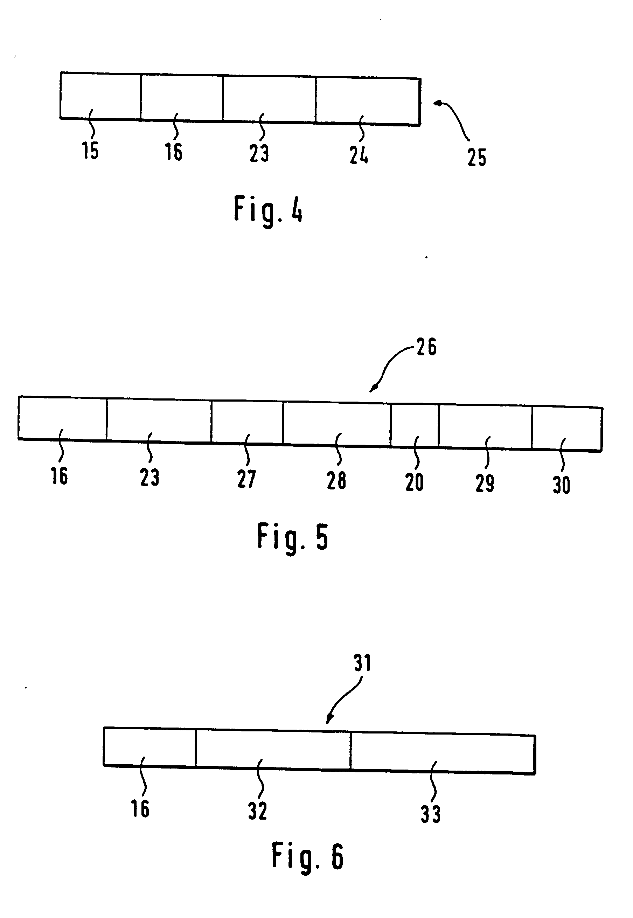

Figur 4 zeigt ein zweites Typ-2-Feld 25 mit der Extension 1, das ein Programmfeld 15, ein Einheitskennfeld 16, ein drittes Startfeld 23 und ein Attributwort 24 aufweist. Das Programmkennfeld 15 weist 16 Bits auf und gibt das Programm an, dem die Einheit zugeordnet ist. Das Einheitskennfeld 16 weist ebenfalls 16 Bits auf und gibt die Kennung der Einheit an. Das dritte Startfeld 23 weist 8 Bits auf und gibt einen CIF-Count an, ab dem die entsprechende Einheit wiedergegeben bzw. die Wiedergabe der entsprechenden Einheit beendet wird. Der CIF-Count stellt einen Zähltakt dar, der vom Sender abgegeben wird und auf den der Empfänger synchronisiert wird.

Mit Hilfe des CIF-Counts ist eine exakte Synchronisierung der Wiedergabe bzw. der Beendigung der Wiedergabe bzw. der Änderung der Art der Wiedergabe der Einheiten möglich. Das Attributwort 24 weist ebenfalls 8 Bits auf und gibt über Wiedergabeattribute an, wie die Ausgabe bzw. Darstellung der Einheiten erfolgen soll. Dabei wird z.B. durch die Angabe von 8 Nullbits angegeben, daß die Wiedergabe der Einheit beendet wird, wobei ein Wiedergabegerät in den Zustand versetzt wird, den das Wiedergabegerät vor Beginn der Wiedergabe hatte.

Eine Angabe von 7 Nullbits und einem Einsbit gibt an, daß die Wiedergabe in der Form beginnt, die für das Wiedergabegerät optimal ist. Durch die Verwendung des dritten Startfeldes 23 wird der Zeitpunkt festgelegt, ab dem eine Änderung der Wiedergabeart erfolgt und über das Attributwort 24 wird die Art der Änderung der Wiedergabe der Einheit festgelegt.

Figur 5 zeigt ein drittes Typ-2-Feld 26 mit der Extension 2. Das dritte Typ-2-Feld 26 gibt den Beginn der Übertragung einer Einheit an. Das dritte Typ-2-Feld 26 weist ein Einheitskennfeld 16, ein drittes Startfeld 23, ein Längenfeld 27, ein Wiederholungsfeld 28, ein freies Datenfeld 20, ein CRC-Flag 29 und ein CRC-Feld 30 auf. Das Einheitskennfeld 16 gibt die Kennung der Einheit an, für die das dritte Typ-2-Feld 26 bestimmt ist. Das Einheitskennfeld 16 weist 16 Bits auf. Das dritte Startfeld 23 ist 8 Bit lang und gibt den CIF-Count an, ab dem die Übertragung der Einheit beginnt. Das Längenfeld 27 ist 32 Bits lang und gibt die Anzahl der Datenbytes der Einheit an.

Das freie Datenfeld 20 weist z.B. eine Länge von drei Bits auf und steht für einen zukünftigen Gebrauch zur Verfügung. In einem freien Datenfeld 20 werden zur Zeit z.B. Nullbits übertragen. Das CRC-Flag 29 ist 1 Bit lang und gibt an, ob eine Prüfsumne übertragen wird. Ist ein 0-Bit im CRC-Flag abgelegt, so wird keine Prüfsumme verwendet. Mit einem 1-Bit wird angegeben, daß eine Prüfsumme übertragen wird. Dabei wird z.B. eine 16 Bit lange Prüfsumme verwendet, die auf folgendem Polynom

$$G(x) = x^{16} + x^{12} + x^5 + 1$$

aufgebaut ist. Die Prüfsumme (cyclic redundancy check word) ist im CRC-Feld 30 abgelegt.

Für jede Einheit wird ein erstes, zweites und drittes Type-2-Feld 12,25,26 übertragen.

Figur 6 zeigt ein Typ-1-Feld 31 der Extension 3. Das Typ-1-Feld 31 weist ein 16 Bit langes Einheitskennfeld 16 auf. Zudem ist ein 16 * 8 Bit langes Characterfeld 32 und ein 16 Bit langes Character-Flag-Feld 33 angeordnet. Das Charakterfeld 32 enthält eine Bezeichnung oder einen Namen für die mit dem Einheitskennfeld 16 bezeichneten Einheit. Das Character-Flag-Feld 33 enthält eine Kurzform der Bezeichnung oder des Namens.

Mit Hilfe des Typ-1-Feld 31 wird ein Name einer Einheit übertragen. Über das Einheitskennfeld 16 wird der Name der Einheit eindeutig einer Einheit zugeordnet. Der Name kann in einem Empfänger über ein Display angezeigt oder über einen Lautsprecher ausgegeben werden, so daß ein Benutzer des Empfängers mit Hilfe des Namens die Einheit auswählen kann. Steht zur Darstellung der Bezeichnung nur eine kleine Anzahl von Zeichen oder Buchstaben zur Verfügung, so wird die im Character-Flag-Feld 33 abgelegte Kurzform angezeigt. Für jede Einheit wird ein Typ-1-Feld 31 übertragen.

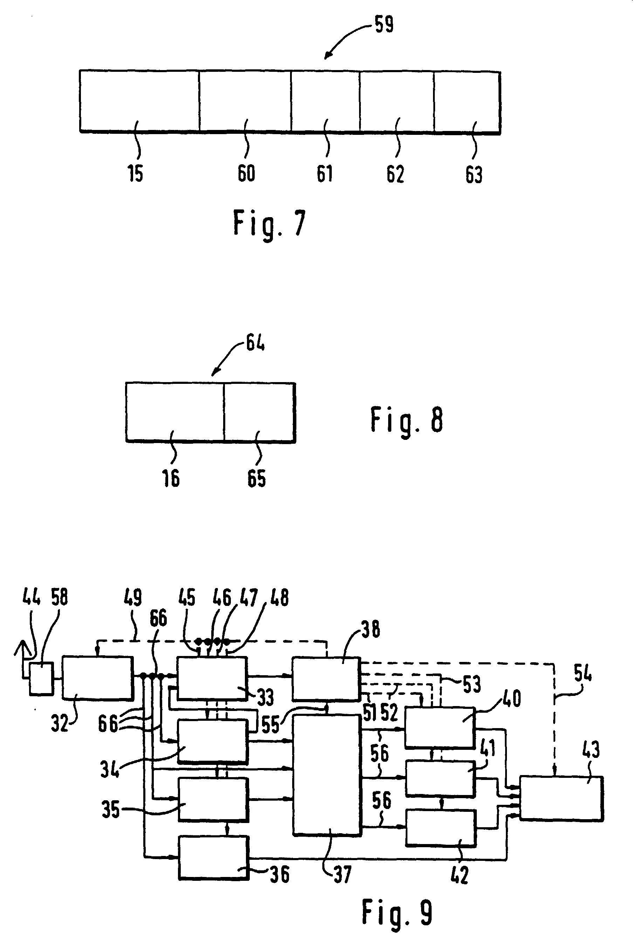

Figur 7 zeigt ein Programmfeld 59, das in ein Programmkennfeld 15, ein Anzahlfeld 60, ein erstes, ein zweites, und ein drittes Komponentenfeld 61,62 und 63 unterteilt ist. Das Programmkennfeld 15 gibt das Programm an, das Anzahlfeld 60 ist vier Bit lang und gibt die Anzahl der zum Programm gehörenden Komponenten, in diesem Fall drei, an. Das erste Komponentenfeld 61 ist sechzehn Bit lang und enthält eine Kennung, die die Komponente eindeutig kennzeichnet, eine Bezeichnung oder einen Namen für die Komponente und die Angabe, daß es sich um eine Bildkomponente handelt, d.h. alle Einheiten, die zur ersten Komponente 61 gehören beinhalten Bilddaten.

Das zweite Komponentenfeld 62 ist sechzehn Bit lang und enthält eine Kennung, die die Komponente eindeutig kennzeichnet, eine Bezeichnung oder einen Namen für die Komponente und die Angabe, daß es sich bei dieser Komponente um Audiodaten handelt. Alle Einheiten, die zur zweiten Komponente 62 gehören, stellen Audiodaten dar.

Das dritte Komponentenfeld 63 ist sechzehn Bit lang und enthält eine Kennung, die die Komponente eindeutig kennzeichnet, eine Bezeichnung oder einen Namen für die Komponente und die Angabe, daß es sich bei dieser Komponente um Textdaten handelt. Dadurch ist festgelegt, daß alle Einheiten, die zu dieser Komponente gehören, Textdaten beinhalten. Für jedes Programm wird ein Programmfeld 59 übertragen.

Figur 8 zeigt einen Komponentenzeiger 64, der 24 Bit lang ist und angibt, zu welcher Komponente eine Einheit gehört. Dazu weist der Komponentenzeiger 64 ein Einheitskennfeld 16 auf, das die Einheit bezeichnet, und ein Komponentendatum 65, das die Kennung der Komponente angibt, zu der die Einheit gehört. Für jede Einheit wird ein Komponentenzeiger 64 übertragen, so daß für jede Einheit bekannt ist, zu welcher Komponente sie gehört. Damit ist auch bekannt, welche Art von Daten z.B. Bilddaten, Audiodaten oder Textdaten die Einheiten beinhalten.

Figur 9 zeigt schematisch einen digitalen Rundfunkempfänger (DAB-Empfänger). Über eine Antenne 44 werden die übertragenen Daten an ein Front-End 58 und von dem Front-End 58 an einen Kanaldecoder 32 gegeben. Der Kanaldecoder 32 ist über Datenleitungen 66 mit einem Fast-Information-Decoder 33, einem Datendecoder 34, einem PAD-Decoder 35, einem Speicher 37 und einem ersten Audiodecoder 36 verbunden. Ein Ausgang des Fast-Information-Decoders 33 ist mit einem Systemcontroller 38 verbunden. Ein Ausgang des Datendecoders 34 ist mit dem Speicher 37 verbunden. Ebenso ist ein Ausgang des PAD-Decoders 35 mit dem Speicher 37 verbunden. Der Speicher 37 ist über Datenausgänge 56 mit einem zweiten Audiodecoder 40, einem Videodecoder 41 und einem Textdecoder 42 verbunden.

Ein Ausgang des zweiten Audiodecoders 40, ein Ausgang des Videodecoders 41, ein Ausgang des Textdecoders 42 und ein Ausgang des ersten Audiodecoders 36 sind mit Eingängen eines Multimedia-Terminals 43 verbunden. Der Systemcontroller 38 ist über eine erste Steuerleitung 49 mit dem Kanaldecoder 32, über eine zweite Steuerleitung 45 mit dem Fast-Information-Decoder 33, mit einer dritten Steuerleitung 46 mit dem Datendecoder 34, mit einer vierten Steuerleitung 47 mit dem PAD-Decoder 35 und mit einer fünften Steuerleitung 48 mit dem ersten Audiodecoder 36 verbunden.

Zusätzlich ist der Systemcontroller 38 mit einer siebten Steuerleitung 51 mit dem zweiten Audiodecoder 40, mit einer achten Steuerleitung 52 mit dem Videodecoder 41 und mit einer neunten Steuerleitung 53 mit dem Textdecoder 42 verbunden. Weiterhin geht eine Steuer- und Datenverbindung 54 vom Systemcontroller 38 zum Multimedia-Terminal 43. Über die Steuer- und Datenleitung 54 werden Steuer- und Datensignale zwischen dem Systemcontroller 38 und dem Multimedia-Terminal 43 ausgetauscht. Der Systemkontroller 38 ist über eine zehnte Steuerleitung 55 mit dem Speicher 37 verbunden.

Das Verfahren zur Übertragung digitaler Daten und digitaler Zusatzdaten wird anhand der Übertragung eines digitalen Rundfunkprogrammes beschrieben. Dieses Verfahren kann auch für andere digitale Datenübertragungssysteme wie z.B. Fernsehübertragung verwendet werden. In dem beschriebenen digitalen Rundfunkprogramm werden als digitale Daten Audiodaten und als digitale Zusatzdaten Bilder und/oder Audiodaten und/oder Texte oder beliebig andere Datenformen übertragen, wobei zur Übertragung der Daten die in den Figuren 1 bis 8 dargestellten Datenformate verwendet werden. Je nach Übertragungsverfahren können auch andere Datenformate verwendet werden.

Die Übertragung der Daten und der Zusatzdaten wird in dem Übertragungsrahmen 1 vorgenommen. Dabei werden die Daten und die Zusatzdaten selbst in dem Mainservice-Kanal 4, der in die Datenrahmen 6 (CIF) unterteilt ist, übertragen. Die Steuerdaten, die zur Darstellung der Zusatzdaten notwendig sind, werden in dem Fast-Information-Kanal 3, der in Fast-Information-Blöcke 5 unterteilt ist, übertragen. Als Steuerdaten werden die in den Figuren 2 bis 8 dargestellten Steuerdaten betrachtet.

Ein Programm, das übertragen wird, besteht aus verschiedenen Komponenten, die wiederum in zeitliche und/oder inhaltliche Einheiten unterteilt sind. Die Komponenten werden z.B. durch Musik, Bilder oder Texteinheiten dargestellt. Die Komponenten sind nach vorgegebenen Zeitintervallen in Einheiten unterteilt. So ist es z.B. möglich, daß ein Programm aus einer Musikkomponente besteht, die wiederum in mehrere Musikeinheiten unterteilt ist, wobei eine Musikeinheit z.B. einen zeitlichen Ausschnitt eines Musikstückes darstellt. Weiterhin weist das gleiche Programm eine Bildkomponente auf, die wiederum in mehrere Bildeinheiten, die ein und dasselbe Bild in verschiedenen Darstellungen oder verschiedene Bilder darstellen, unterteilt ist. Zusätzlich ist eine dritte Komponente, eine Textkomponente Bestandteil des Programms, die wiederum in Texteinheiten unterteilt ist. Die Texteinheiten stellen z.B. verschiedene Texte oder Teile eines Textes dar.

Die Einteilung der Komponenten kann auch dazu verwendet werden, um Zusatzdaten inhaltlich zu unterscheiden, so kann z.B. eine Aufteilung von Nachrichten in politische Nachrichten, Sportnachrichten oder Wirtschaftsnachrichten erfolgen, die jeweils verschiedenen Komponenten zugeordnet sind.

In einem einfachsten Fall wird für jede Einheit, die übertragen wird, eine Kennung der Einheit übertragen. Somit ist jede Einheit eindeutig identifizierbar. Zusätzlich wird für jede Einheit der CIF-Count übertragen, der angibt, wann die Einheit ausgegeben wird. Die Übertragung einer Bezeichnung der Einheit ist notwendig, um einem Benutzer eines Senders anzugeben, welche Einheiten ausgewählt werden können.

In einem verbesserten Verfahren wird für jede Einheit angegeben, zu welchem Zeitpunkt die Gültigkeitsperiode der Einheit beginnt. Zusätzlich zum Beginn der Gültigkeitsperiode wird auch die Dauer der Gültigkeitsperiode übertragen. Die Gültigkeitsperiode gibt an, in welchem Zeitraum die Einheit im Speicher 37 eines Empfängers abgelegt wird.

Eine weitere Ergänzung bei der Übertragung der Einheiten stellt die Angabe dar, über welchen Übertragungskanal die Einheit übertragen wird und wo in dem Übertragungskanal die Daten der Einheit zu finden sind.

Das in Figur 3 dargestellte erste Typ-2-Feld 12 wird verwendet, um die Programmkennung, die Kennung der Einheit, den Beginn und die Daten der Gültigkeitsperiode, den Übertragungskanal und die Stelle, in der die Einheit im Übertragungskanal übertragen wird, zu übertragen.

Weiterhin wird über das zweite Typ-2-Feld 25, das in Figur 4 dargestellt ist, der Beginn und das Ende einer Wiedergabe einer Einheit innerhalb der Gültigkeitsperiode übertragen. Dazu wird die Programmkennung, die Kennung der Einheit und der CIF-Count, der den Zeitpunkt angibt, ab dem die Wiedergabe beginnen oder enden soll, und die Wiedergabeattribute übertragen.

Auf diese Weise wird einem Empfänger über die Wiedergabeattribute angegeben, ob die Wiedergabe beginnen oder enden soll und wie die Wiedergabe erfolgen soll. Dabei wird z.B. der Beginn einer Wiedergabe oder das Ende einer Wiedergabe über den CIF-Count angegeben. Die Art und Weise, in der die Wiedergabe erfolgen soll, wird über die Wiedergabeattribute festgelegt. Dabei kann z.B. bei Bildern die Größe des Bildausschnitts, die Auflösung, die Farbwahl oder bei einer Textausgabe z.B. die Größe des Textes oder bei einer Sprachausgabe z.B. die Lautstärke festgelegt werden.

Zusätzlich zu den genannten Angaben können weitere Informationen über die Übertragung einer Einheit übertragen werden. Dies erfolgt in dem dritten Typ-2-Feld 26, wie in Figur 5 dargestellt ist. Unter Angabe der Kennung der Einheit und des CIF-Counts wird die Länge der Einheit, eine Anzahl von Wiederholungen der Übertragungen der Einheit und die Angabe, ob eine Prüfsumme mit übertragen wird, und die Prüfsumme selbst übertragen.

Auf diese Weise bekommt ein Empfänger die Information, wann die Übertragung der entsprechenden Einheit beginnt (CIF-Count), wie lang das Datenfeld der Einheit ist, ob und wie viele Wiederholungen der Übertragungen der Einheit folgen und ob eine Prüfsumme und welche Prüfsumme mit übertragen wird. Auf diese Weise hat ein Empfänger die Möglichkeit, die Übertragung der Einheit herauszufiltern oder bei einer fehlerhaften Übertragung die Wiederholung der Übertragung der Einheit zu empfangen und zur Überprüfung der fehlerfreien Übertragung die Prüfsumme auszuwerten.

Zusätzlich wird zu den genannten Daten noch eine Bezeichnung oder ein Name für jede Einheit übertragen. Dies erfolgt über das Typ-1-Feld 31, wie in Figur 6 dargestellt ist. Unter Angabe der Kennung der Einheit werden mit Hilfe eines Buchstabenfeldes 32 und eines Buchstaben-Flag-Feldes 33 ein Name bzw. eine Abkürzung für den Namen der Einheit übertragen.

Die in den Figuren 2 bis 8 dargestellten Daten werden über den Fast-Information-Kanal 3 übertragen. Die Daten der Einheiten selbst werden im Mainservice-Kanal 4 innerhalb der Datenrahmen 6 übertragen. Die Übertragung ist so gestaltet, daß die zu den Einheiten der Daten gehörenden Steuerdaten, die über den Fast-Information-Kanal 3 übertragen werden, vor der Übertragung der Daten der Einheiten übertragen werden und somit einem Empfänger rechtzeitig zur Verfügung stehen.

Für eine komfortablere Benutzung des Empfängers werden mehrere Einheiten zu einer Komponente zusammengefaßt. Dies erfolgt durch die Übertragung eines Komponentenzeigers 64 für jede Einheit, der angibt, zu welcher Komponente die Einheit gehört. Zusätzlich werden mehrere Komponenten zu einem Programm zusammengefaßt und ein Programmfeld wird übertragen, das angibt, welche Komponenten zu dem Programm gehören und welche Art von Daten die Einheiten der Komponenten beinhalten. Da mit dem Komponentenfeld noch eine Bezeichnung für jede Komponente mit übertragen wird, können in dem Empfänger sowohl die Komponenten als auch die Einheiten durch eine Anzeige der Bezeichnungen der Komponenten bzw. der Einheiten zur Auswahl angezeigt werden.

Das Verfahren zur Wiedergabe digitaler Daten und digitaler Zusatzdaten wird im folgenden anhand des in Figur 9 schematisch dargestellten digitalen Rundfunkempfängers beschrieben. Das beschriebene Verfahren kann jedoch auf beliebige digitale Empfänger angewendet werden. Ein in Figur 9 dargestellter Empfänger empfängt kanalkodierte Daten und Zusatzdaten über eine Antenne 44. Die Daten und Zusatzdaten werden von einem Front-End 58 in digitale Daten und digitale Zusatzdaten umgewandelt. Anschließend werden die Daten und die Zusatzdaten einem Kanaldecoder 32 zugeführt. Der Kanaldecoder 32 decodiert die im Fast-Information-Kanal 3 abgelegten Steuerdaten und gibt diese an den Fast-Information-Decoder 33 weiter. Der Fast-Information-Decoder 33 decodiert die zugeführten Steuerdaten und gibt diese an den Systemcontroller 38 weiter. Somit werden dem Systemcontroller 38 für jede Einheit eine Kennung der Einheit, das Programm, dem die Einheit zugeordnet ist, die Gültigkeitsperiode und der Übertragungskanal mitgeteilt. Zusätzlich wird dem Systemcontroller angegeben, ab welchem CIF-Count die Wiedergabe der Einheit beginnen oder enden soll.

Zusätzlich werden über die Wiedergabeattribute dem Systemcontroller mitgeteilt, wie die Darstellung der Einheit ausgeführt werden soll.

Weiterhin erfolgt eine Information darüber, wann die Übertragung der Einheit beginnt, wie lange die Einheit ist, ob eine eventuelle Wiederholung der Übertragung der Einheit erfolgt und ob bzw. welche Prüfsumme mit übertragen wird. Zusätzlich erhält der Systemcontroller 38 für jede Einheit einen Namen zugeführt. Weiterhin werden dem Systemcontroller 38 noch die Informationen zugeführt, welche Komponenten zu einem Programm zusammengefaßt sind, welche Art von Daten in den Komponenten enthalten sind und welche Einheiten zu welchen Komponenten gehören. Zusätzlich wird noch für jede Komponente eine Bezeichnung oder ein Name empfangen. Der Systzemcontroller erstellt eine Tabelle, in der die zum Empfang und/oder zur Auswahl und/oder zur Ausgabe der Einheiten bzw. der Komponenten notwendigen Stuerdaten abgespeichert sind.

Der Kanaldecoder 32 decodiert den Übertragungskanal über den die digitalen Daten in Form von Audiodaten übertragen werden und gibt diese an den ersten Audiodecoder 36 weiter.

Zur Übertragung der Zusatzdaten in Form von Einheiten werden in diesem Ausführungsbeispiel drei verschiedene Übertragungskanäle verwendet. Es können jedoch auch andere und mehr oder weniger Übertragungskanäle verwendet werden. Zum einen erfolgt eine Übertragung der Daten in Form eines seriellen Datenstromes, zum zweiten eine Übertragung der Daten in Paketen und zum dritten eine Übertragung der Daten in Form von eng mit den Audiodaten verbundenen Daten (program associated data), die in einem Ancillary-Datenfeld der Iso-Norm 11172/3 übertragen werden. Weitere Einzelheiten über die drei Übertragungskanäle sind bei P.Ratliff,"EUREKA 147 Digital Audio Broadcasting- The System for Mobile, Portable and Fixed Receivers", Second International Symposium on Digital Audio Broadcasting, Toronto, Canada, März 1994, S. 294 ff. beschrieben.

Für die drei verschiedenen Übertragungsarten sind drei Decoder im Empfänger angeordnet. Der Kanaldecoder 32 für die seriellen Daten, der Datendecoder 34 für die in Paketen übertragenen Daten und der der PAD-Decoder 35 für die im Ancillary-Datenfeld übertragenen Daten. Die Decoder 32,34,35 sind vom Systemcontroller 38 ansteuerbar. Die Decoder 32,33,34,35 sind so ausgebildet, daß die Daten der entsprechenden Übertragungskanäle decodiert werden.

Da der Systemcontroller 38 die Informationen hat, auf welchen Übertragungskanal die Einheiten zu welcher Zeit übertragen werden, schaltet der Systemcontroller 38 den Kanaldecoder 32 auf den entsprechenden Kanal, so daß der Kanaldecoder 32 anschließend die kanaldecodierten Zusatzdaten entweder an den Datendecoder 34 oder den PAD-Decoder 35 oder direkt decodiert und in den Speicher 37 einliest. Die kanalkodierten Steuerdaten werden entsprechend nach Ansteuerung vom Systemcontroller 38 vom Kanaldecoder 32 an den FIC-Decoder 33 weitergegeben.

Der Datendecoder 34 und der PAD-Decoder 35 führen eine Decodierung der Zusatzdaten durch und lesen die decodierten Zusatzdaten anschließend in den Speicher 37 ein. Der Systemcontroller 38 ist über die zehnte Steuerleitung 55 mit dem Speicher 37 verbunden, so daß das Einlesen der decodierten Zusatzdaten vom Systemcontroller über eine Write-Leitung zusätzlich gesteuert werden kann.

Der Systemcontroller 38 erstellt die Tabelle, in der abgelegt ist, welche Einheiten zu welchen Komponenten und welche Komponenten zu welchen Programmen gehören. Weiterhin sind in der Tabelle für jede Einheit und für jede Komponente die Bezeichnungen abgelegt. Zusätzlich sind in der Tabelle die Gültigkeitsperioden der Einheiten abgelegt, so daß eine Abspeicherung der Zusatzdaten, die die Daten der Einheiten darstellen, im Speicher 37 nur über die Gültigkeitsperiode erfolgt. Wahlweise erfolgt nach Ablauf der Gültigkeitsperiode eine Löschung der Einheit oder die Einheit wird nach Ablauf der Gültigkeitsperiode mit Daten einer neuen Einheit überschrieben.

Über das Multimedia-Terminal 43 gibt der Systemcontroller 38 die Bezeichnungen bzw. Namen der Einheiten und/oder der Komponenten an. Das Multimedia-Terminal weist eine optische und/oder akustische Anzeige auf und verfügt über ein Tastenfeld zur Eingabe von Zahlen und/oder Buchstaben und/oder über einen Sprachcomputer zur akustischen Eingabe eines Namens oder einer Bezeichnung.

Ein Benutzer des Empfängers wählt nun über eine Eingabe der Bezeichnung bzw. des Namens über das Multimedia-Terminal 43 aus, welche Komponenten bzw. Einheiten eines Programmes ausgegeben werden sollen. Diese Information wird an den Systemcontroller 38 weitergegeben. Der Systemcontroller 38 liest entsprechend den Vorgaben des Benutzers rechtzeitig die gewählten Einheiten aus dem Speicher 37 aus und gibt diese entsprechend der Art der Daten der Einheiten, je nachdem, ob es sich um Audiodaten, Videodaten oder Textdaten handelt, an den zweiten Audiodecoder 40, an den Videodecoder 41 oder den Textdecoder 42. Der Audiodecoder 40, der Videodecoder 41 und der Textdecoder 42 werden von dem Systemcontroller 38 entsprechend angesteuert und wandeln die digitalen Zusatzdaten in analoge Signale um.

Die Daten der Einheiten oder der Komponenten werden an das Multimedia-Terminal 43 weitergegeben. Das Multimedia-Terminal 43 wird vom Systemcontroller 38 ebenfalls angesteuert. Mit Hilfe des Multimedia-Terminals 43 erfolgt eine Wiedergabe der Daten der Einheiten bzw. der Komponenten in Form von Audiodaten und/oder Videodaten und/oder Textdaten. Die Ausgabe der Einheiten wird entsprechend den mit übertragenen Steuerdaten vorgenommen.

Das Multimedia-Terminal 43 gibt über die Steuer- und Datenleitung 54 Informationen an den Systemcontroller 38, welche Wiedergabe z.B. Bild, Sprache oder Text möglich ist, so daß der Systemcontroller 38 nur die Einheiten an das Multimedia-Terminal weitergibt, die auch ausgegeben werden können.

Die übertragenen digitalen Daten, in diesem Fall die Audiodaten, die vom ersten Audiodecoder 36 decodiert werden, werden je nach Ansteuerung vom Systemcontroller 38 immer oder auch zeitlich begrenzt empfangen und über das Multimedia-Terminal 43 ausgegeben.

Das vorgeschlagene Verfahren erlaubt es z.B. auch, alle Komponenten eines Programmes aufzuzeichnen und bei jeder Wiedergabe andere Komponenten auszugeben.

## Patentansprüche

1. Verfahren zur Rundfunkübertragung digitaler Audiodaten und digitaler Zusatzdaten, die Bilder, Texte oder Ansagen darstellen und in als Datengruppen ausgebildete Einheiten eingeteilt werden, wobei mit jeder Einheit eine Kennung der Einheit übertragen wird, dadurch gekennzeichnet, daß die Kennung den Namen der Einheit enthält und daß für jede Einheit Steuerzeichen übertragen werden, die angeben, über welchen Zeitraum die Einheit im Empfänger gespeichert bleibt und zu welcher Zeit die Einheit bei Auswahl über ihren Namen im Empfänger dargestellt wird.

2. Verfahren nach Anspruch 1, dadurch gekennzeichnet, daß die Auswahl der Einheiten, die im Empfänger dargestellt werden sollen, durch den Benutzer anhand der übertragenen Namen erfolgt.

3. Verfahren nach Anspruch 1 oder 2, dadurch gekennzeichnet, daß bei Verwendung mehrerer Übertragungskanäle für jede Einheit ein Kanalwort übertragen wird, das den zur Übertragung der Einheit verwendeten Übertragungskanal angibt.

4. Verfahren nach einem der Ansprüche 1 bis 3, dadurch gekennzeichnet, daß der Beginn der Übertragung einer Einheit übertragen wird, und daß die Anzahl der zu der Einheit gehörenden Daten übertragen wird.

5. Verfahren nach Anspruch 4, dadurch gekennzeichnet, daß die Anzahl der Wiederholungen der Übertragung der Einheit übertragen wird.

6. Verfahren nach einem der Ansprüche 1 bis 5, dadurch gekennzeichnet, daß Wiedergabeattribute für eine Darstellung bzw. für eine Ausgabe der Einheiten übertragen werden.

7. Verfahren nach einem der Ansprüche 1 bis 6, dadurch gekennzeichnet, daß jede Einheit versehen mit einer Prüfsumme zur Fehlererkennung übertragen wird.

8. Verfahren nach einem der Ansprüche 1 bis 7, dadurch gekennzeichnet, daß mehrere Einheiten zu einer Komponente und mehrere Komponenten zu einem Programm zusammengefaßt übertragen werden.

## Claims

1. Method for the radio-broadcasting transmission of digital audio data and digital additional data which represent pictures, texts or announcements and are classified into units constructed as data groups, a unit identifier being transmitted with each unit, characterized in that the identifier contains the name of the unit, and in that control characters are transmitted for each unit, which control characters specify the period of time over which the unit remains stored in the receiver and the time at which the unit is presented in the event of selection by way of its name in the receiver.

2. Method according to Claim 1, characterized in that the selection of the units to be presented in the receiver is effected by the user using the transmitted name.

3. Method according to Claim 1 or 2, characterized in that when a plurality of transmission channels are used, a channel word is transmitted for each unit, which channel word specifies the transmission channel used for the transmission of the unit.

4. Method according one of Claims 1 to 3, characterized in that the beginning of the transmission of a unit is transmitted, and in that the number of data belonging to the unit is transmitted.

5. Method according to Claim 4, characterized in that the number of repetitions of the transmission of the unit is transmitted.

6. Method according to one of Claims 1 to 5, characterized in that reproduction attributes for presentation and/or for outputting of the units are transmitted.

7. Method according to one of Claims 1 to 6, characterized in that each unit is transmitted in a manner such that it is provided with a check sum for error detection.

8. Method according to one of Claims 1 to 7, characterized in that a plurality of units are transmitted in a manner such that they are combined to form a component and a plurality of components are combined to form a programme.

## Revendications

1. Procédé de transmission radio de données audio numériques et de données supplémentaires numériques qui représentent des images, des textes ou des informations et sont divisées en unités réalisées sous forme de groupes de données, une caractéristique d'unité étant transmise avec chaque unité,
caractérisé en ce que
la caractéristique contient le nom de l'unité et pour chaque unité on transmet des signes de commande indiquant la durée pendant laquelle l'unité reste enregistrée dans le récepteur et à partir de quel instant l'unité sera présentée dans le récepteur par la sélection de son nom.

2. Procédé selon la revendication 1,
caractérisé en ce que
la sélection des unités que l'on veut représenter dans le récepteur se fait par l'utilisateur à l'aide des noms transmis.

3. Procédé selon la revendication 1 ou 2,
caractérisé en ce que
lorsqu'on utilise plusieurs canaux de transmission, pour chaque unité on transmet un mot de canal qui indique le canal de transmission utilisé pour la transmission de l'unité.

4. Procédé selon l'une quelconque des revendications 1 à 3,
caractérisé en ce qu'
on transmet le début de la transmission d'une unité et on transmet le nombre de données faisant partie de l'unité.

5. Procédé selon la revendication 4,
caractérisé en ce qu'
on transmet le nombre de répétitions de la transmission de l'unité.

6. Procédé selon l'une quelconque des revendications 1 à 5,
caractérisé en ce qu'
on transmet les attributs de reproduction pour une présentation pour l'émission de l'unité.

7. Procédé selon l'une quelconque des revendications 1 à 6,
caractérisé en ce que
chaque unité est transmise avec une somme d'erreurs pour le contrôle des défauts.

8. Procédé selon l'une quelconque des revendications 1 à 7,
caractérisé en ce que
plusieurs unités sont réunies en un composant et plusieurs composants sont réunis en un programme pour être transmis ainsi.

Fig. 1

Fig. 2

Fig. 3

Fig. 4

Fig. 5

Fig. 6

Fig. 7

Fig. 8

Fig. 9